# EUROPÄISCHE PATENTSCHRIFT

(11) **EP 2 904 049 B1**
(45) Veröffentlichungstag und Bekanntmachung des Hinweises auf die Patenterteilung: **28.03.2018**
(21) Anmeldenummer: 13721952.3
(22) Anmeldetag: 03.05.2013
(51) Int. Cl.: C08L 75/04, C01F 7/02, C08K 3/22, C09C 1/40

(54) **WÄRMELEITFÄHIGES POLYMER UND HARZZUSAMMENSETZUNGEN ZUR HERSTELLUNG DESSELBEN**
THERMALLY CONDUCTIVE POLYMER AND RESIN COMPOSITIONS FOR PRODUCING SAME
POLYMÈRE THERMOCONDUCTEUR ET COMPOSITIONS DE RÉSINE POUR LE PRODUIRE

(30) Priorität: 05.10.2012 DE 102012109500
(43) Veröffentlichungstag der Anmeldung: 12.08.2015
(73) Patentinhaber: Dr. Neidlinger Holding GmbH, 73760 Ostfildern-Kemnat (DE)
(72) Erfinder: FRANK, Jochen, 73773 Aichwald (DE)
(74) Vertreter: Witte, Weller & Partner Patentanwälte mbB
(86) Internationale Anmeldenummer: PCT/EP2013/059220
(87) Internationale Veröffentlichungsnummer: WO 2014/053252

(56) Entgegenhaltungen:
- EP-A1- 0 897 955
- EP-A1- 2 031 002
- WO-A2-2010/074840
- JP-A- 2004 342 758
- JOCHEN FRANK: "Erhöhte Wärmeleitung bei gutem Fliessverhalten", ADHÄSION : KLEBEN & DICHTEN ; DAS FACHMAGAZIN FÜR INDUSTRIELLE KLEB- UND DICHTTECHNIK, SPRINGER, GERMANY, Bd. 56, Nr. 1-2, 1. August 2012 (2012-08-01), Seiten 39-42, XP008163458, ISSN: 1619-1919, DOI: 10.1365/S35145-012-0089-3 in der Anmeldung erwähnt

## Beschreibung

Die vorliegende Erfindung betrifft Polyurethanpolymere mit erhöhter Wärmeleitfähigkeit sowie polymerisierbare Harzzusammensetzungen, Härterzusammensetzungen und mineralische Füllstoffmischungen, die unter anderem zur Herstellung solcher Polymere verwendet werden können.

Im Zuge der derzeitigen Entwicklungen auf dem Gebiet der Elektromobilität und insbesondere auf dem Gebiet der elektrischen Kraftfahrzeuge, wie beispielsweise PKWs aber auch Busse und Lastkraftfahrzeuge, hat sich gezeigt, dass im Bereich des Einbaus der Speichermedien für die elektrische Energie, das heißt beim Einbau von Batterien und Batteriesystemen, Materialien mit einem äußerst komplexen Anforderungsprofil benötigt werden. Zum einen sollten solche Materialien eine ausreichende Flexibilität und Elastizität aufweisen, um gegenüber den im Betrieb des Fahrzeugs auftretenden Vibrationen eine ausreichende Dämpfungswirkung zu erreichen. Die Materialien sollten ferner eine ausreichende Wärmeleitfähigkeit aufweisen, um zum Beispiel während des Ladevorgangs auftretende Wärme von den Energiespeichermedien abzuleiten, um Beschädigungen dort zu vermeiden. Gleichzeitig sollten solche Materialien aber auch eine möglichst hohe elektrische Isolierung aufweisen, da ein Überschlagen von Elektrizität aus den Speichermedien zum Beispiel auf die Karosserie verlässlich verhindert werden muss, um eine Gefährdung zum Beispiel der Fahrzeuginsassen zu verhindern. Ferner sollten die zu verwendenden Materialien aus Sicherheitsgründen ausreichende selbstverlöschende Eigenschaften zeigen und im Hinblick auf den sicheren Einbau auch langfristig formstabil bleiben.

Es hat sich gezeigt, dass das Anforderungsprofil im Hinblick auf die Elastizität und die hohe elektrische Isolierung nur unter Verwendung von Polymermaterialien erreicht werden kann. Im Hinblick auf die Erzielung der nötigen Wärmeleitfähigkeit wird schon seit einiger Zeit versucht, die Wärmeleitfähigkeit von Polymeren durch Zugabe wärmeleitfähiger Füllstoffe zu erhöhen, wobei dabei wieder darauf geachtet werden muss, dass dadurch die elektrische Isolationsfähigkeit nicht verloren geht.

Im Hinblick auf die Verarbeitbarkeit solcher befüllten Polymere wiederum sollten die Ausgangsmaterialien eine Viskosität aufweisen, die über einen breiten Bereich je nach Anforderung einstellbar ist, wobei insbesondere im Hinblick auf die Herstellung von Polymerformkörpern durch Gießverfahren eine niedrige Viskosität von Interesse sein kann. Im Hinblick auf diese Problematik sei insbesondere auf die Publikation von J. Frank in Kleben & Dichten, 1-2/2012, verwiesen, die sich mit dem Konfliktfeld Wärmeleitfähigkeit und Viskosität allgemein auseinandersetzt.

Im Hinblick auf die Herstellung und Kosten wäre es ferner von Vorteil, wenn die verwendeten Materialien mit möglichst wenigen verschiedenen Komponenten hergestellt werden könnten. Außerdem wäre es noch insbesondere in logistischer Hinsicht vorteilhaft, wenn die zur Herstellung der wärmeleitfähigen Materialien verwendeten Ausgangsmaterialien beispielsweise im Hinblick auf das Absetzverhalten oder auch die Reaktivität über lange Zeit lagerstabil wären.

Im Stand der Technik sind bereits verschiedene mit anorganischen Füllstoffen beladene Polymersysteme bekannt, es hat sich jedoch gezeigt, dass bisher noch kein Material vorhanden ist, welches alle der oben genannten Eigenschaften in Bereichen aufweist, die für die Anwendung zum Beispiel in elektrisch angetriebenen Fahrzeugen ausreichend sind.

So sind zum Beispiel in der Promotion von Wolfgang Übler ("Erhöhung der thermischen Leitfähigkeit elektrisch isolierender Polymerwerkstoffe", Technische Fakultät der Universität Erlangen-Nürnberg, 2002, erhältlich in der Deutschen Nationalbibliothek) ausgiebige Studien zu Epoxidharzsystemen beschrieben, die unter anderem mit Aluminiumoxidpartikeln verschiedener Größen beladen wurden.

Auch wenn mit den dort beschriebenen Systemen Polymere mit annehmbarer Wärmeleitfähigkeit und hoher elektrischer Isolierung erhalten wurden, sind die dort beschriebenen Systeme, da diese zu sehr harten und spröden Materialien auspolymerisieren, aufgrund der mangelnden Elastizität und damit der mangelnden Dämpfungswirkung für den Einsatz in Elektrofahrzeugen nur begrenzt geeignet. Ferner sind in diesem Dokument auch zur Frage der selbstverlöschenden Eigenschaften keinerlei Ausführungen gemacht.

Ferner werden die in diesem Dokument beschriebenen Epoxydharze dadurch hergestellt, dass zuerst eine Mischung aus Harz und Härter hergestellt wird und dann die Füllstoffe in dieses Gemisch eingetragen werden, wobei sich dieses Verfahren im Hinblick auf den erhöhten Verarbeitungsaufwand sowie darauf, dass die erhaltenen Produkte nicht die für die Verwendung als wärmeleitende Materialien nötige Homogenität aufweisen, als für die großtechnische Anwendung bei wärmeleitenden Materialien nur begrenzt geeignet erwiesen hat. Letzteres ist auch im Hinblick darauf zu sehen, dass an der Langzeitstabilität einer vorab hergestellten Mischung aus Epoxydharz und Aluminiumoxid deutliche Zweifel bestehen.

Die JP 2002-138205 beschreibt ein thermisch leitfähiges Polymer in Form eines Silikons, das mit bis zu 70 Vol.-% eines wärmeleitfähigen Füllstoffs beladen ist. Dieser Füllstoff kann dabei zu bis zu 90 Vol.-% aus einem Metallhydroxid, insbesondere Aluminiumhydroxid, bestehen, wobei die Differenz durch andere Füllstoffe, wie beispielsweise Aluminiumoxid ausgeglichen wird.

Das aus diesem Dokument bekannte Polymersystem hat zuallererst den Nachteil, dass es sich hierbei um ein auf Silikon basierendes System handelt, das aufgrund dessen, dass es auch nach dem Aushärten häufig zum Migrieren von Monomeren kommen kann, für den Verbau zum Beispiel in Elektrofahrzeugen im Allgemeinen nicht geeignet oder erwünscht ist.

Ferner haben Silikone das Problem, dass diese zum Beispiel unter Gewichtsbelastung, wie dies durch Batterien in einem Elektrofahrzeug erfolgen kann, zum Kriechen neigen, das heißt, dass diese sich mit der Zeit irreversibel verformen können, was ebenfalls für den Verbau in der Automobiltechnik unerwünscht ist.

Ferner erscheint es auch beim Lesen des Dokumentes so, dass die gewünschte thermische Leitfähigkeit nur durch Beimischung des weiteren Füllstoffs, also des Aluminiumoxids, erreicht werden kann, was die Formulierung deutlich verkompliziert.

Aus der JP 2004-342758 A sind thermisch leitfähige Polymere auf Basis eines Polyurethans bekannt, das mit Aluminiumhydroxidpartikeln befüllt ist.

Die aus diesem Dokument bekannten Polymere haben zwar im besten Fall eine akzeptable Wärmeleitfähigkeit von ca. 0,9 W/m*K, aufgrund des Gehalts an Aluminiumhydroxid von 44 Vol.-% im endfertigen Polymer ist jedoch davon auszugehen, dass dieses nur auf Kosten eines niedrigen Quervernetzungsgrades im Polymer erreicht wurde, wie sich dies auch aus dem in diesem Dokument beschriebenen niedrigen NCO-Index ergibt. Ein solches Material ist zwar zur Verwendung als relativ dünne Polymerfolie in elektronischen Geräten geeignet, solche Polymere sind jedoch aufgrund des niedrigen Quervernetzungsgrades und daraus resultierend der geringen mechanischen Stabilität für den Einsatz im Bereich der Elektromobilität nicht geeignet.

Es sind ferner allgemein mit Aluminiumhydroxid beladene Harzzusammensetzungen, zum Beispiel auf Polyolbasis, bekannt, bis jetzt wurde allerdings davon ausgegangen, dass bei einer Beladung von 70 Gew.-% eine Grenze erreicht wird, nach der solche beladenen Harzzusammensetzungen in Gießverfahren nicht mehr prozesssicher zu verarbeiten sind.

Im Hinblick auf die oben gemachten Ausführungen ist es somit eine Aufgabe der vorliegenden Erfindung, ein Material zu beschreiben, das sich sowohl durch eine hohe Wärmeleitfähigkeit wie auch eine hohe elektrische Isolierung sowie eine gute Elastizität und Langzeitformstabilität auszeichnet.

Es ist ferner eine Aufgabe der vorliegenden Erfindung, eine polymerisierbare Harzzusammensetzung bzw. eine Härterzusammensetzung zu beschreiben, mit der ein wie oben beschriebenes Polymer herstellbar ist, deren Viskosität in einem breiten Bereich einstellbar ist, wobei insbesondere die Viskosität so sein soll, dass die Zusammensetzungen zur Verwendung in Gießverfahren geeignet sind.

Es ist ferner eine Aufgabe der vorliegenden Erfindung, eine mineralische Füllstoffzusammensetzung zu beschreiben, mit der die zuvor genannten Zusammensetzungen und Polymere hergestellt werden können.

Die vorliegenden Erfinder haben jetzt überraschenderweise herausgefunden, dass durch spezifisches Formulieren, insbesondere einer spezifischen Auswahl der Füllstoffe, Harzzusammensetzungen mit Füllgraden an Aluminiumhydroxid von 75 Gew.-% und mehr und Härterzusammensetzungen mit Füllgraden an Aluminiumhydroxid von 70 Gew.-% und mehr hergestellt werden können, die noch immer eine gute Verarbeitbarkeit und insbesondere nützliche Viskositäten aufweisen.

In einem Aspekt betrifft die Erfindung daher eine polymerisierbare Harzzusammensetzung, die Folgendes aufweist, nämlich ein oder mehrere polymerisierbare Harzkomponenten, ausgewählt aus der Gruppe bestehend aus den Polyolen, den Polyaminen und Mischungen davon, insbesondere den Polyetherpolyolen, den Polyester-Polyesterpolyolen und den Polybutadienpolyolen, Aluminiumhydroxid sowie ggf. andere Hilfsstoffe, wie beispielsweise Netz- und Dispergieradditive, Farbstoffe, Pigmente, Trocknungsmittel, Füllstoffe, Polyalkohole, Butandiol, Hexandiol, Entschäumer, Antiabsetzmittel, Weichmacher wie beispielsweise Phosphate, und Katalysatoren, wobei die Harzzusammensetzung bezogen auf 100 Gew.-% der Harzzusammensetzung mindestens 75 Gew.-%, und insbesondere von 75 bis 85 Gew.-% Aluminiumhydroxid enthält.

Das Aluminiumhydroxid liegt in Form von zumindest vier Füllstoffkomponenten vor,
wobei die erste Füllstoffkomponente eine mittlere Partikelgröße von 75 bis 150, vorzugsweise von 80 bis 125 µm aufweist,
wobei die zweite Füllstoffkomponente eine mittlere Partikelgröße von 10 bis 60, vorzugsweise von 30 bis 50 µm aufweist,
wobei die dritte Füllstoffkomponente eine mittlere Partikelgröße von 1 bis 5, vorzugsweise von 2 bis 4 µm aufweist, und
wobei die vierte Füllstoffkomponente eine mittlere Partikelgröße von 3 µm oder weniger, vorzugsweise von 0,5 bis 3 µm aufweist.

Ein weiterer Aspekt betrifft die Verwendung der beschriebenen Füllstoffmischung zur Verbesserung der Wärmeleitfähigkeit von Polymeren.

Ein weiterer Aspekt betrifft eine Härterzusammensetzung, die Folgendes aufweist, nämlich ein oder mehrere Härterkomponenten, ausgewählt aus der Gruppe bestehend aus den Isocyanaten, insbesondere den aromatischen Isocyanaten und den aliphatischen Isocyanaten, beispielsweise Methylendiphenyldiisocyanat, Hexamethylendiisocyanat, Toluoldiisocyanat und Vorpolymeren davon, Aluminiumhydroxid sowie ggf. andere Hilfsstoffe, wie beispielsweise Netz- und Dispergieradditive, Farbstoffe, Pigmente, Trocknungsmittel, Füllstoffe, Entschäumer, Antiabsetzmittel, Weichmacher wie beispielsweise Phosphate, und Katalysatoren, wobei die Härterzusammensetzung bezogen auf 100 Gew.-% der Härterzusammensetzung mindestens 70 Gew.-%, und insbesondere von 70 bis 85 Gew.-% Aluminiumhydroxid enthält.

Das Aluminiumhydroxid liegt in Form von zumindest vier Füllstoffkomponenten vor,
wobei die erste Füllstoffkomponente eine mittlere Partikelgröße von 75 bis 150, vorzugsweise von 80 bis 125 µm aufweist,
wobei die zweite Füllstoffkomponente eine mittlere Partikelgröße von 10 bis 60, vorzugsweise von 30 bis 50 µm aufweist,
wobei die dritte Füllstoffkomponente eine mittlere Partikelgröße von 1 bis 5, vorzugsweise von 2 bis 4 µm aufweist, und
wobei die vierte Füllstoffkomponente eine mittlere Partikelgröße von 3 µm oder weniger, vorzugsweise von 0,5 bis 3 µm aufweist.

Ein weiterer Aspekt betrifft die Verwendung der beschriebenen Füllstoffmischung zur Verbesserung der Wärmeleitfähigkeit von Polymeren.

In einem weiteren Aspekt betrifft die Erfindung einen Polymerformkörper, der durch Polymerisieren der oben genannten Harzzusammensetzung hergestellt ist. Alternativ kann ein Polymerformkörper unter Verwendung der genannten Härterzusammensetzung hergestellt werden.

Ein weiterer Aspekt betrifft ein Polymer, ausgewählt aus den Polyurethanen, den Polyharnstoffen und Mischungen bzw. Copolymeren davon, wobei das Polymer bezogen auf 100 Vol.-% des Polymers mehr als 50 Vol.-%, vorzugsweise mehr als 55 Vol.-% und insbesondere mehr als 60 Vol.-% Aluminiumhydroxid aufweist.

Das Aluminiumhydroxid liegt in Form von zumindest vier Füllstoffkomponenten vor,
wobei die erste Füllstoffkomponente eine mittlere Partikelgröße von 75 bis 150, vorzugsweise von 80 bis 125 µm aufweist,
wobei die zweite Füllstoffkomponente eine mittlere Partikelgröße von 10 bis 60, vorzugsweise von 30 bis 50 µm aufweist,
wobei die dritte Füllstoffkomponente eine mittlere Partikelgröße von 1 bis 5, vorzugsweise von 2 bis 4 µm aufweist, und
wobei die vierte Füllstoffkomponente eine mittlere Partikelgröße von 3 µm oder weniger, vorzugsweise von 0,5 bis 3 µm aufweist.

Ein weiterer Aspekt betrifft die Verwendung der beschriebenen Füllstoffmischung zur Verbesserung der Wärmeleitfähigkeit von Polymeren.

Ein weiterer Aspekt betrifft eine polymerisierbare Harzzusammensetzung, die Folgendes aufweist, nämlich ein oder mehrere polymerisierbare Harzkomponenten ausgewählt aus der Gruppe bestehend aus den Polyolen, den Polyaminen und Mischungen davon, insbesondere den Polyetherpolyolen, den Polyesterpolyolen, und den Polybutadienpolyolen, die oben genannte mineralische Füllstoffmischung, sowie ggf. weitere Hilfsstoffe, wie beispielsweise Netz- und Dispergieradditive, Farbstoffe, Pigmente, Trocknungsmittel, Füllstoffe, Polyalkohole, Butandiol, Hexandiol, Entschäumer, Antiabsetzmittel, Weichmacher wie beispielsweise Phosphate, und Katalysatoren.

Ein weiterer Aspekt betrifft eine Härterzusammensetzung, die Folgendes aufweist, nämlich eine oder mehrere Härterkomponenten, ausgewählt aus der Gruppe bestehend aus den Isocyanaten, insbesondere den alphatischen und den aromatischen Isocyanaten, beispielsweise Methylendiphenyldiisocyanat, Hexamethylendiisocyanat, Toluoldiisocyanat und Vorpolymeren davon, die oben genannte mineralische Füllstoffmischung, sowie ggf. weitere Hilfsstoffe, wie beispielsweise Netz- und Dispergieradditive, Farbstoffe, Pigmente, Trocknungsmittel, Füllstoffe, Entschäumer, Antiabsetzmittel, Weichmacher wie beispielsweise Phosphate, und Katalysatoren.

Ein weiterer Aspekt betrifft ein Polymer, ausgewählt aus den Polyurethanen, den Polyharnstoffen und Mischungen bzw. Copolymeren davon, das die oben genannte mineralische Füllstoffmischung aufweist.

Es hat sich nun gezeigt, dass eine polymerisierbare Harzzusammensetzung gemäß der Erfindung bzw. eine Härterzusammensetzung dazu verwendet werden kann, ein flexibles, jedoch gleichzeitig stabiles Polyurethanpolymer herzustellen, das sowohl eine gute Wärmeleitfähigkeit und eine hohe elektrische Isolierung sowie auch ausgezeichnete selbstverlöschende Eigenschaften aufweist.

Die aus der polymerisierbaren Harzzusammensetzung bzw. unter Verwendung der Härterzusammensetzung hergestellten Polyurethanpolymere haben ferner den Vorteil, dass sie eine ausreichende Elastizität zum Einsatz in elektrisch betriebenen Fahrzeugen sowie eine ausgezeichnete Langzeitformstabilität aufweisen.

Die polymerisierbaren Harzzusammensetzungen und Härterzusammensetzungen haben ferner den Vorteil, dass es sich gezeigt hat, dass diese trotz der relativ hohen Beladung mit Füllstoffen in Viskositäten hergestellt werden können, die sich zum Beispiel gut zum Einsatz in Gießverfahren eignen.

Es hat sich hierbei insbesondere gezeigt, dass die erfindungsgemäßen mineralischen Füllstoffkombinationen eine hohe Beladung von Harzzusammensetzungen und Härterzusammensetzungen bei gleichzeitig niedriger Viskosität ermöglichen.

Die polymerisierbare Harzzusammensetzung gemäß der Erfindung weist eine oder mehrere Harzkomponenten aus der Gruppe der Polyole oder Polyamine und Mischungen davon auf. Eine Harzkomponente im Sinne der Erfindung kann jedes Polyol, Polyamin oder jede Mischung solcher Komponenten sein, das durch eine Reaktion mit einem Isocyanat zu einem Polyurethan, einem Polyharnstoffpolymer oder entsprechenden Copolymeren, umgesetzt werden kann. Die Harzkomponenten schließen hierbei sowohl funktionelle Polymere und Präpolymere, aber auch einfache Monomere ein. Die genaue Art und Kombination der Harzkomponenten kann hierbei von einem Fachmann basierend auf seinem Fachwissen im Hinblick sowohl auf die gewünschten Eigenschaften der Harzzusammensetzung als auch die Eigenschaften des endfertigen Polymers gewählt werden. Eine Mischung aus Polyol und Polyamin kann im Sinne der Erfindung sowohl eine Mischung aus zumindest zwei Komponenten als auch eine einzelne Komponente mit Hydroxy- und Aminfunktionalitäten sein.

Die Härterzusammensetzung weist zumindest eine Härterkomponente aus der Gruppe der Isocyanate auf. Die Härterkomponenten schließen alle dem Fachmann bekannten und in der Polyurethan- und Polyharnstoffherstellung verwendeten Isocyanate ein. Es kann sich dabei sowohl um monomerische wie auch um vorpolymerisierte Isocyanate handeln. Die genaue Art, Menge und Kombination des bzw. der Isocyanate der Härterkomponente kann hierbei von einem Fachmann basierend auf seinem Fachwissen und im Hinblick auf die gewünschten Eigenschaften des Polymers ausgewählt werden. Bevorzugt werden in der Härterkomponente aromatische und alphatische Isocyanate, beispielsweise Methylendiphenyldiisocyanat, Hexamethylendiisocyanat und/oder Toluoldiisocyanat bzw. Vorpolymere davon verwendet.

Bei dem in der polymerisierbaren Harzzusammensetzung der Erfindung, der Härterzusammensetzung, der Füllstoffmischung sowie dem Polyurethanpolymer verwendeten Aluminiumhydroxid kann es sich um jede Form von Aluminiumhydroxid handeln, die dem Fachmann geläufig und die kommerziell erhältlich ist, so lange die Größe der Partikel sich in dem Bereich bewegt, wie er für Füllstoffe in der Polymertechnik üblich ist. Im Hinblick auf die Verarbeitbarkeit liegt hier üblicherweise die Obergrenze für die mittlere Partikelgröße der im Bereich von 500 µm und weniger, vorzugsweise im Bereich von 200 µm und weniger und insbesondere bei maximal 150 µm.

Im Hinblick auf die Form der Aluminiumhydroxidpartikel und im Hinblick auf eine möglichst effektive Ausfüllung des Raums ist es bevorzugt, wenn die Aluminiumhydroxidpartikel nicht in Form von Partikeln mit hohem Aspektverhältnis, wie beispielsweise in Form von Plättchen oder Fasern vorliegen. Es ist insbesondere bevorzugt, wenn die Aluminiumhydroxidpartikel in Form sphärischer oder annähernd sphärischer Teilchen vorliegen.

Bei den weiteren Hilfsstoffen, die ggf. in der Harzzusammensetzung vorliegen können, kann es sich um jegliche dem Fachmann bekannte Hilfsstoffe handeln, die zum Beispiel dazu eingesetzt werden, die Verarbeitbarkeit, die Lagerstabilität, die Topfzeit oder auch die Viskosität der polymerisierbaren Harzzusammensetzung bzw. der Härterzusammensetzung der Erfindung zu beeinflussen bzw. einem daraus herzustellenden Polymer weitere Eigenschaften zu verleihen.

Es ist ferner auch möglich, dass die polymerisierbaren Harzzusammensetzungen der Erfindung, Härterzusammensetzungen und Polymere weitere mineralische Füllstoffe, zum Beispiel zur Verbesserung der thermischen Leitfähigkeit, aufweisen. Im letzteren Fall können solche Füllstoffe in jeder Menge vorhanden sein, sofern der Minimalgehalt an Aluminiumhydroxid gemäß der Erfindung nicht unterschritten wird.

Unter der mittleren Partikelgröße einer Füllstoffkomponente gemäß der Erfindung wird der d₅₀-Wert verstanden. Der d₅₀-Wert ist die Teilchengröße, bei der 50 Vol.-% der Teilchen der Füllstoffkomponenten feiner als der d₅₀-Wert sind und 50 Vol.-% grober.

Unter einer Füllstoffkomponente wird im Rahmen der Erfindung ein Füllstoff mit einem Peak in der Korngrößenverteilung verstanden. Mit anderen Worten weist die erfindungsgemäße Füllstoffmischung zumindest vier Peaks in der Korngrößenverteilung auf, wobei die Peaks in den oben genannten Korngrößenbereichen liegen. Es ist im Rahmen der Erfindung dabei möglich, die Komponenten einzeln zur Herstellung der Füllstoffmischung, der Harzzusammensetzung, der Härterzusammensetzung bzw. des Polymers einzusetzen bzw. zu vermischen. Es ist im Rahmen der Erfindung ebenfalls vorgesehen und möglicherweise vorteilhaft, zwei oder mehrere Füllstoffkomponenten in Form einer vorgefertigten Füllstoffmischung einzusetzen.

Die Nummerierung der Füllstoffkomponenten soll im Rahmen der Erfindung keinerlei Ordnung oder Priorisierung bedeuten sondern dient lediglich dazu die Füllstoffkomponenten voneinander zu unterscheiden.

Die Bereiche Partikelgrößenverteilungen für die dritte und vierte Füllstoffkomponente der Erfindung überschneiden sich. Es ist einem Fachmann dabei klar, dass es im Rahmen der Erfindung keinen Unterschied macht welche der beiden Komponente welche mittlere Partikelgröße aufweist, insofern zwei Füllstoffkomponenten vorliegen deren mittlere Partikelgrößen in den jeweils angegebenen Bereichen liegen. Es ist im Rahmen der Erfindung möglich, dass die mittleren Partikeldurchmesser zweier, einer oder keiner der Füllstoffkomponenten in dem Überschneidungsbereich liegen. Beispielsweise wäre es möglich, dass die dritte Füllstoffkomponente einen mittleren Partikeldurchmesser von 4 µm aufweist und die vierte Füllstoffkomponente einen mittleren Partikeldurchmesser von 0.7 µm (keine Füllstoffkomponente im Überschneidungsbereich). Ein weiteres Beispiel im Rahmen der Erfindung ist eine Füllstoffmischung in der die dritte Füllstoffkomponente einen mittleren Partikeldurchmesser von 2.5 µm aufweist und die vierte Füllstoffkomponente einen mittleren Partikeldurchmesser von 0.7 µm (eine Füllstoffkomponente im Überschneidungsbereich). Ein weiteres Beispiel im Rahmen der Erfindung ist eine Füllstoffmischung in der die dritte Füllstoffkomponente einen mittleren Partikeldurchmesser von 2.5 µm aufweist und die vierte Füllstoffkomponente einen mittleren Partikeldurchmesser von 1.5 µm (beide Füllstoffkomponenten im Überschneidungsbereich). Der Fakt, dass in den obigen Beispielen der mittlere Partikeldurchmesser der dritten Füllstoffkomponente immer größer ist als der der vierten Füllstoffkomponente diente lediglich der Einfachheit und hat keine Auswirkungen auf den Schutzbereich.

Der Ausdruck "aufweisen" bzw. "aufweisend" bezeichnet im Rahmen der vorliegenden Erfindung eine offene Aufzählung und schließt neben den ausdrücklich genannten Bestandteilen andere Bestandteile nicht aus.

Der Ausdruck "besteht aus" bzw. "bestehend aus" bezeichnet im Rahmen der vorliegenden Erfindung eine geschlossene Aufzählung und schließt neben den ausdrücklich genannten Bestandteilen jegliche andere Bestandteile aus.

Der Ausdruck "besteht im Wesentlichen aus" bzw. "im Wesentlichen bestehend aus" bezeichnet im Rahmen der vorliegenden Erfindung eine teilweise geschlossene Aufzählung und bezeichnet Zubereitungen, die neben den genannten Bestandteilen nur solche weiteren Bestandteile aufweisen, die den erfindungsgemäßen Charakter der Zubereitung nicht materiell verändern.

Wenn im Rahmen der vorliegenden Erfindung eine Zubereitung unter Verwendung des Ausdrucks "aufweisen" bzw. "aufweisend" beschrieben ist, schließt dies ausdrücklich Zubereitungen ein, die aus den genannten Bestandteilen bestehen oder im Wesentlichen aus den genannten Bestandteilen bestehen.

In einer Ausgestaltung der Erfindung weist die Harzzusammensetzung bzw. die Härterzusammensetzung maximal 0,3, vorzugsweise 0,25 Gew.-% Netzmittel auf und ist vorzugsweise im Wesentlichen frei von Netzmittel.

Der Ausdruck "im Wesentlichen frei von Netzmittel" bedeutet im Rahmen der Erfindung, dass in der Harzzusammensetzung bzw. der Härterzusammensetzung keinerlei Netzmittel vorliegen bzw. die Netzmittel in einer Menge vorliegen, die entweder nicht nachweisbar ist oder in der die Netzmittel ihre Funktion nicht ausüben können.

Es hat sich gezeigt, dass zwar durch Zugabe von Netzmitteln häufig die Viskosität von Harzzusammensetzungen bzw. Härterzusammensetzungen, die Polyole bzw. Isocyanate sowie Füllstoffe in großen Mengen aufweisen, verbessert werden kann, dies jedoch auch dazu führt, dass die individuellen Partikel des Füllstoffs besser von dem Polymer umschlossen werden, was zu einer Ausbildung von wärmeisolierenden Schichten zwischen den individuellen Partikeln führt und somit die Wärmeleitfähigkeit eines daraus hergestellten Polymers teilweise drastisch verschlechtert. Im Hinblick darauf ist es gemäß der vorliegenden Erfindung zum Erhalt von Polymeren mit hoher Wärmeleitfähigkeit bevorzugt, wenn die Harzzusammensetzungen bzw. Härterzusammensetzungen nur geringe Mengen Netzmittel aufweisen und vorzugsweise frei von Netzmitteln sind.

Das Aluminiumhydroxid liegt in der Harzzusammensetzung, in der Härterzusammensetzung oder dem Polymer in Form von zumindest vier Füllstoffkomponenten vor,
wobei die erste Füllstoffkomponente eine mittlere Partikelgröße von 75 bis 150, vorzugsweise 80 bis 125 µm aufweist,
wobei die zweite Füllstoffkomponente eine mittlere Partikelgröße von 10 bis 60, vorzugsweise 30 bis 50 µm aufweist,
wobei die dritte Füllstoffkomponente eine mittlere Partikelgröße von 1 bis 5, vorzugsweise 2 bis 4 µm aufweist, und
wobei die vierte Füllstoffkomponente eine mittlere Partikelgröße von3 µm oder weniger, vorzugsweise von 0,5 bis 3 µm aufweist.

Es hat sich überraschenderweise gezeigt, dass die Verwendung von Aluminiumhydroxid, das aus individuellen Komponenten in den oben genannten mittleren Partikelgrößen zusammengesetzt ist, es ermöglicht eine hohe Beladung und daraus resultierend in dem hergestellten Polymer eine hohe Wärmeleitfähigkeit zu erreichen, ohne dass dabei die Viskosität der Harzzusammensetzung bzw. der Härterzusammensetzung so erhöht wird, dass diese zum Beispiel nicht mehr für Verwendungen in Gießverfahren anwendbar sind.

In einer weiteren Ausgestaltung der Erfindung liegt zumindest eine weitere Füllstoffkomponente vor, die ausgewählt ist aus der Gruppe bestehend aus Aluminiumhydroxid, Aluminiumoxid, Aluminiumnitrid, Quarz, Bornitrid, Siliziumcarbid, Magnesiumoxid, Calciumcarbonat, Bariumsulfat, Talkum und Mischungen davon.

Es hat sich gezeigt, dass durch Beimischen einer oder mehrerer Füllstoffkomponenten die Wärmeleitfähigkeit eines aus den Zusammensetzungen erhaltenen Polymers noch einmal deutlich erhöht werden kann, ohne dabei wiederum die Viskosität der Harzzusammensetzung bzw. der Härterzusammensetzung zu sehr zu verschlechtern.

Im Falle der Zugabe eines Füllstoffes, bei dem es sich nicht um Aluminiumhydroxid handelt, besteht außerdem die Möglichkeit, durch Zugabe nur kleinerer Mengen teurer, jedoch thermisch hocheffektiver Füllstoffe, wie beispielsweise Bornitrid, die Wärmeleitfähigkeit eines aus der polymerisierbaren Harzzusammensetzung bzw. unter Verwendung der Härterzusammensetzung erhaltenen Polymers noch einmal deutlich zu erhöhen, ohne dass dabei die polymerisierbare Harzzusammensetzung oder die Härterzusammensetzung nicht mehr wirtschaftlich rentabel herzustellen wäre.

Im Falle der Zugabe einer weiteren Füllstoffkomponente, bei der es sich nicht um Aluminiumhydroxid handelt, wird diese nicht der Aluminiumhydroxidmenge zugerechnet. Das heißt, dass die polymerisierbare Harzzusammensetzung noch immer mindestens 75 Gew.-% Aluminiumhydroxid, die Härterzusammensetzung mindestens 70 Gew.-% Aluminiumhydroxid und das Polymer mindestens 50 Vol.-% Aluminiumhydroxid aufweisen muss.

In einer weiteren Ausgestaltung der Erfindung liegen die erste, zweite, dritte und vierte Füllstoffkomponente in den folgenden Verhältnissen bezogen auf 100 % der Füllstoffmischung vor:
erste Füllstoffkomponente: 40 bis 60, vorzugsweise 45 bis 55 Gew.-%,
zweite Füllstoffkomponente: 5 bis 25, vorzugsweise 10 bis 20 Gew.-%,
dritte Füllstoffkomponente: 10 bis 30, vorzugsweise 15 bis 25 Gew.-%,
vierte Füllstoffkomponente: 5 bis 25, vorzugsweise 10 bis 20 Gew.-%,
wobei die ggf. vorliegende(n) weitere(n) Füllstoffkomponente(n) der Menge der Füllstoffkomponente zugerechnet wird, die dieser im Hinblick auf die Teilchengröße am nächsten kommt.

Das bedeutet im Rahmen der vorliegenden Erfindung, dass, sollte zum Beispiel eine weitere Füllstoffkomponente mit einer mittleren Partikelgröße von 70 µm zugegeben werden, dass diese der ersten Füllstoffkomponente zugerechnet wird, das heißt, dass die zugegebene weitere Füllstoffkomponente zusammen mit der ersten Füllstoffkomponente 40 bis 60, vorzugsweise 45 bis 55 Gew.-% der Füllstoffmischung ausmacht. Sollte die weitere Füllstoffkomponente zum Beispiel eine mittlere Partikelgröße von 8 µm aufweisen, würde diese der zweiten Füllstoffkomponente zugerechnet, wobei dann wiederum die weitere Füllstoffkomponente und die zweite Füllstoffkomponente zusammen 5 bis 25, vorzugsweise 10 bis 20 Gew.-% der Füllstoffmischung ausmachen. Dies gilt unabhängig davon, ob es sich bei dieser Füllstoffkomponente um Aluminiumhydroxid handelt oder nicht, wobei die Mindestmenge an Aluminiumhydroxid allerdings nicht unterschritten werden darf.

Es ist im Rahmen der vorliegenden Erfindung auch durchaus möglich und vorgesehen, dass mehr als eine weitere Füllstoffkomponente zugegeben wird, wobei diese analog zu den obigen Ausführungen jeweils der im Hinblick auf die Partikelgröße nächstliegenden Füllstoffkomponente zugerechnet werden. In jedem Fall ist noch einmal darauf hinzuweisen, dass sämtliche Füllstoffkomponenten, bei denen es sich nicht um Aluminiumhydroxid handelt, nicht zur Menge des Aluminiumhydroxids zugerechnet werden, das heißt zum Beispiel zusätzlich zu den mindestens 75 Gew.-% Aluminiumhydroxid in der polymerisierbaren Harzzusammensetzung vorliegen.

In einer weiteren Ausgestaltung der Erfindung weist die polymerisierbare Harzzusammensetzung bezogen auf 100 Gew.-% der Harzzusammensetzung Folgendes auf, nämlich
5 bis 25, vorzugsweise 15 bis 25 Gew.-% eines oder mehrere Polyole ausgewählt aus den Polyetherpolyolen, den Polyesterpolyolen, den Polybutadienpolyolen und den hydrophoben aliphatischen Polyolen,
0,0 bis 2,5, vorzugsweise 0,5 bis 1,5 Gew.-% eines kurzkettigen Etheralkohols,
0,0 bis 0,25, vorzugsweise 0,0 bis 0,15 Gew.-% eines Netzmittel und
75 bis 85 Gew.-% Aluminiumhydroxid sowie ggf. weitere Hilfsstoffe, wie beispielsweise Netz- und Dispergieradditive, Farbstoffe, Pigmente, Trocknungsmittel, Füllstoffe, Polyalkohole, Butandiol, Hexandiol, Entschäumer, Antiabsetzmittel, Weichmacher wie beispielsweise Phosphate und Katalysatoren.

Es hat sich gezeigt, dass eine polymerisierbare Harzzusammensetzung mit dieser Zusammensetzung besonders geeignet ist, um wärmeleitfähige Polyurethanpolymere herzustellen, die zum Beispiel im Einsatz bei elektrisch betriebenen Fahrzeugen nützlich sind.

In einer weiteren Ausgestaltung der Erfindung weist die Harzzusammensetzung eine Viskosität von 1.600 bis 30.000 mPa·s, vorzugsweise von 1.600 bis 25.000 mPa·s bei 50°C auf.

Es hat sich gezeigt, dass polymerisierbare Harzzusammensetzungen mit einer Viskosität in dem oben genannten Bereich besonders zur Verwendung in Gießverfahren, zum Beispiel zur Herstellung von Polymerformkörpern, geeignet sind. Im Rahmen der Erfindung angegebene Viskositäten sind auf einem Rotationsviskosimeter Thermo Haake VT550® mit dem Prüfkörper E100 auf Stufe 4 oder Stufe 8 gemessen.

In einer weiteren Ausgestaltung der Erfindung weist das Polyurethanpolymer gemäß der Erfindung eine Wärmeleitfähigkeit von mehr als 1 W/m*K, gemessen nach ISO 22007-2:2008, auf.

Es hat sich gezeigt, dass Polyurethanpolymere mit dieser Mindestwärmeleitfähigkeit eine ausreichende Wärmeleitfähigkeit zum Beispiel für den Einsatz in elektrisch betriebenen Fahrzeugen aufweisen.

In einer weiteren Ausgestaltung der Erfindung weist das Polyurethanpolymer eine Shore-Härte von A30 bis D90, vorzugsweise von A30 bis D50, gemessen nach ISO 868 bzw. DIN 53505, auf.

Es hat sich gezeigt, dass Polyurethanpolymere mit dieser Härte eine ausreichende Flexibilität und Dämpfungswirkung zum Beispiel für den Einsatz in elektrisch betriebenen Fahrzeugen aufweisen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachstehend in Bezug auf die folgenden nicht einschränkenden Beispiele näher beschrieben und erläutert.

### Beispiele

Unter Verwendung der im Folgenden beschriebenen Inhaltsstoffe in den in Tabelle 1 genannten Mengen wurden polymerisierbare Harzzusammensetzungen und Härterzusammensetzungen durch Mischen und Homogenisieren hergestellt. Die so erhaltenen Zusammensetzungen können bis zum Gebrauch problemlos gelagert werden.

**Tabelle 1**

| **Inhaltsstoff [Gew.-%]** | **Beispiel 1** | **Beispiel 2** | **Beispiel 3** | **Beispiel 4** |
|---|---|---|---|---|
| WEVOPUR 60010 | 25 | 0 | 0 | 0 |
| WEVOPUR 60011 | 0 | 20 | 0 | 0 |
| WEVOPUR 60012 | 0 | 0 | 20 | 0 |
| WEVOPUR PD 60013 | 0 | 0 | 0 | 25 |
| Füllstoff 1 | 37,50 | 40 | 40 | 37,3 |
| Füllstoff 2 | 22,50 | 24 | 24 | 22,9 |
| Füllstoff 3 | 15 | 16 | 16 | 14,8 |

### Füllstoffe:

### Füllstoff 1

| | |
|---|---|
| Typ: | partikelförmiges Al(OH)₃ |
| mittlere Partikelgröße: | 125 µm |

### Füllstoff 2

| | |
|---|---|
| Typ: | partikelförmiges Al(OH)₃ |
| mittlere Partikelgröße: | 6 µm (bimodale Partikelgrößenverteilung, mittlere Partikelgröße der ersten Komponente etwa 40 µm, mittlere Partikelgröße der zweiten Komponente etwa 2 µm, Verhältnis ca. 1:1) |

### Füllstoff 3

| | |
|---|---|
| Typ: | partikelförmiges Al(OH)₃ |
| mittlere Partikelgröße: | 2,7 µm |

Bei den Produkten WEVOPUR 60010, WEVOPUR 60011, WEVOPUR 60012 und WEVOPUR PD 60013 handelt es sich um ungefüllte Harzzusammensetzungen auf Polyolbasis, die kommerziell von der Firma WEVO Chemie, Ostfildern-Kemnat, Deutschland erhältlich sind.

Die Mischung von Beispiel 1 hat eine Viskosität bei 50°C von 3.000 bis 4.000 mPa·s.

Zur Herstellung eines erfindungsgemäßen Polyurethanpolymers wurde die Polymermischung von Beispiel 1 mit 6 Teilen eines Isocyanats mit einem NCO-Gehalt von 32,5 % vermischt, in eine Form gegeben und dann bei 80°C 24 Stunden ausgehärtet. Das erhaltene Polymer hatte eine Shore-A-Härte von 68 und eine Wärmeleitfähigkeit an der Oberseite von 1,19 Wm/*K und an der Unterseite von 1,25 W/m*K und zeigte somit eine für den Einsatz im Bereich von elektrisch betriebenen Fahrzeugen sehr nützliche Wärmeleitfähigkeit.

## Patentansprüche

1. Polymerisierbare Harzzusammensetzung, die Folgendes aufweist, nämlich ein oder mehrere polymerisierbare Harzkomponenten ausgewählt aus der Gruppe bestehend aus den Polyolen, den Polyaminen und Mischungen davon, insbesondere den Polyetherpolyolen, den Polyesterpolyolen, und den Polybutadienpolyolen, Aluminiumhydroxid, sowie ggf. weitere Hilfsstoffe, wie beispielsweise Netz- und Dispergieradditive, Farbstoffe, Pigmente, Trocknungsmittel, Füllstoffe, Polyalkohole, Butandiol, Hexandiol, Entschäumer, Antiabsetzmittel, Weichmacher wie beispielsweise Phosphate, und Katalysatoren, wobei die Harzzusammensetzung bezogen auf 100 Gew.-% der Harzzusammensetzung mindestens 75 Gew.-%, und insbesondere von 75 bis 85 Gew.-% Aluminiumhydroxid enthält, **dadurch gekennzeichnet, dass** das Aluminiumhydroxid in Form von zumindest vier Füllstoffkomponenten vorliegt,
wobei die erste Füllstoffkomponente eine mittlere Partikelgröße d₅₀ von 75 bis 150, vorzugsweise von 80 bis 125 µm aufweist,
wobei die zweite Füllstoffkomponente eine mittlere Partikelgröße d₅₀ von 10 bis 60, vorzugsweise von 30 bis 50 µm aufweist,
wobei die dritte Füllstoffkomponente eine mittlere Partikelgröße d₅₀ von 1 bis 5, vorzugsweise von 2 bis 4 µm aufweist, und
wobei die vierte Füllstoffkomponente eine mittlere Partikelgröße d₅₀ von 3 µm oder weniger, vorzugsweise von 0,5 bis 3 µm aufweist.

2. Polymerisierbare Harzzusammensetzung nach Anspruch 1, **dadurch gekennzeichnet, dass** diese maximal 0,3, vorzugsweise maximal 0,25 Gew.-% Netzmittel aufweist und vorzugsweise im Wesentlichen frei von Netzmittel ist.

3. Polymerisierbare Harzzusammensetzung nach Anspruch 1, **dadurch gekennzeichnet, dass** eine weitere Füllstoffkomponente vorliegt, die ausgewählt ist aus der Gruppe bestehend aus Aluminiumhydroxid, Aluminiumoxid, Aluminiumnitrid, Quarz, Bornitrid, Siliziumcarbid, Magnesiumoxid, Calciumcarbonat, Bariumsulfat, Talkum und Mischungen davon.

4. Polymerisierbare Harzzusammensetzung nach Anspruch 1 oder 3, **dadurch gekennzeichnet, dass** die erste, zweite, dritte und vierte Füllstoffkomponente in folgenden Verhältnissen bezogen auf 100% der Füllstoffmischung vorliegen:
erste Füllstoffkomponente:40 bis 60, vorzugsweise 45 bis 55 Gew.-%
zweite Füllstoffkomponente:5 bis 25, vorzugsweise 10 bis 20 Gew.-%
dritte Füllstoffkomponente:10 bis 30, vorzugsweise 15 bis 25 Gew.-%
vierte Füllstoffkomponente:5 bis 25, vorzugsweise 10 bis 20 Gew.-%,
wobei die ggf. vorliegende(n) weitere(n) Füllstoffkomponente(n) der Menge der Füllstoffkomponente zugerechnet wird, die dieser im Hinblick auf die Teilchengröße am nächsten kommt.

5. Polymerisierbare Harzzusammensetzung nach einem der Ansprüche 1 bis 4, die bezogen auf 100 Gew.-% der Harzzusammensetzung Folgendes aufweist, nämlich:
5 bis 25, vorzugsweise 15 bis 25 Gew.-% eines oder mehrerer Polyole, ausgewählt aus den Polyetherpolyolen, den Polesterpolyolen, den Polybutadienpolyolen, und den hydrophoben, aliphatischen Polyolen,
0,05 bis 2,5, vorzugsweise 0,5 bis 1,5 Gew.-% eines kurzkettigen Etheralkohols,
0,0 bis 0,25, vorzugsweise 0,0 bis 0,15 Gew.-% eines Netzmittels, und
75 bis 85 Gew.-% Aluminiumhydroxid,
sowie ggf. weitere Hilfsstoffe, wie beispielsweise Netz- und Dispergieradditive, Farbstoffe, Pigmente, Trocknungsmittel, Füllstoffe, Polyalkohole, Butandiol, Hexandiol, Entschäumer, Antiabsetzmittel, Weichmacher wie beispielsweise Phosphate und Katalysatoren.

6. Polymerisierbare Harzzusammensetzung nach einem der Ansprüche 1 bis 5, **dadurch gekennzeichnet, dass** die Harzzusammensetzung eine Viskosität von 1.600 bis 30.000 mPa·s, vorzugsweise von 1.600 bis 25.000 mPa.s, wobei die Viskosität durch die in der Beschreibung genannte Messmethode bestimmt wird.

7. Härterzusammensetzung, die Folgendes aufweist, nämlich eine oder mehrere Härterkomponenten, ausgewählt aus der Gruppe bestehend aus den Isocyanaten, insbesondere den alphatischen und den aromatischen Isocyanaten, beispielsweise Methylendiphenyldiisocyanat, Hexamethylendiisocyanat, Toluoldiisocyanat und Vorpolymeren davon, Aluminiumhydroxid, sowie ggf. weitere Hilfsstoffe, wie beispielsweise Netz- und Dispergieradditive, Farbstoffe, Pigmente, Trocknungsmittel, Füllstoffe, Entschäumer, Antiabsetzmittel, Weichmacher wie beispielsweise Phosphate, und Katalysatoren, wobei die Härterzusammensetzung bezogen auf 100 Gew.-% der Härterzusammensetzung mindestens 70 Gew.-%, vorzugsweise von 70 bis 85 Gew.-% Aluminiumhydroxid enthält, **dadurch gekennzeichnet, dass** das Aluminiumhydroxid in Form von zumindest vier Füllstoffkomponenten vorliegt,
wobei die erste Füllstoffkomponente eine mittlere Partikelgröße d₅₀ von 75 bis 150, vorzugsweise von 80 bis 125 µm aufweist,
wobei die zweite Füllstoffkomponente eine mittlere Partikelgröße d₅₀ von 10 bis 60, vorzugsweise von 30 bis 50 µm aufweist,
wobei die dritte Füllstoffkomponente eine mittlere Partikelgröße d₅₀ von 1 bis 5, vorzugsweise von 2 bis 4 µm aufweist, und
wobei die vierte Füllstoffkomponente eine mittlere Partikelgröße d₅₀ von 3 µm oder weniger, vorzugsweise von 0,5 bis 3 aufweist.

8. Härterzusammensetzung nach Anspruch 7, **dadurch gekennzeichnet, dass** diese maximal 0,3, vorzugsweise maximal 0,25 Gew.-% Netzmittel aufweist und vorzugsweise im Wesentlichen frei von Netzmittel ist.

9. Härterzusammensetzung nach Anspruch 7, **dadurch gekennzeichnet, dass** eine weitere Füllstoffkomponente vorliegt, die ausgewählt ist aus der Gruppe bestehend aus Aluminiumhydroxid, Aluminiumoxid, Aluminiumnitrid, Quarz, Bornitrid, Siliziumcarbid, Magnesiumoxid, Calciumcarbonat, Bariumsulfat, Talkum und Mischungen davon.

10. Härterzusammensetzung nach Anspruch 7 oder 9, **dadurch gekennzeichnet, dass** die erste, zweite, dritte und vierte Füllstoffkomponente in folgenden Verhältnissen bezogen auf 100% der Füllstoffmischung vorliegen:
erste Füllstoffkomponente:40 bis 60, vorzugsweise 45 bis 55 Gew.-%
zweite Füllstoffkomponente:5 bis 25, vorzugsweise 10 bis 20 Gew.-%
dritte Füllstoffkomponente:10 bis 30, vorzugsweise 15 bis 25 Gew.-%
vierte Füllstoffkomponente:5 bis 25, vorzugsweise 10 bis 20 Gew.-%,
wobei die ggf. vorliegende(n) weitere(n) Füllstoffkomponente(n) der Menge der Füllstoffkomponente zugerechnet wird, die dieser im Hinblick auf die Teilchengröße am nächsten kommt.

11. Polymerformkörper, hergestellt durch Polymerisieren einer Harzzusammensetzung nach einem der Ansprüche 1 bis 6 oder unter Verwendung einer Härterzusammensetzung nach einem der Ansprüche 7 bis 10.

12. Polymer, ausgewählt aus den Polyurethanen, den Polyharnstoffen und Mischungen bzw. Copolymeren davon, **dadurch gekennzeichnet, dass** es bezogen auf 100 Vol.-% des Polymers mehr als 50 Vol.-%, vorzugsweise mehr als 55 Vol.-% und insbesondere mehr als 60 Vol.-% Aluminiumhydroxid aufweist, **dadurch gekennzeichnet, dass** das Aluminiumhydroxid in Form von zumindest vier Füllstoffkomponenten zur vorliegt,
wobei die erste Füllstoffkomponente eine mittlere Partikelgröße d₅₀ von 75 bis 150, vorzugsweise von 80 bis 125 µm aufweist,
wobei die zweite Füllstoffkomponente eine mittlere Partikelgröße d₅₀ von 10 bis 60, vorzugsweise von 30 bis 50 µm aufweist,
wobei die dritte Füllstoffkomponente eine mittlere Partikelgröße d₅₀ von 1 bis 5, vorzugsweise von 2 bis 4 µm aufweist, und
wobei die vierte Füllstoffkomponente eine mittlere Partikelgröße d₅₀ von 3 µm oder weniger, vorzugsweise von 0,5 bis 3 µm aufweist.

13. Polymer nach Anspruch 12, **dadurch gekennzeichnet, dass** eine weitere Füllstoffkomponente vorliegt, die ausgewählt ist aus der Gruppe bestehend aus Aluminiumhydroxid, Aluminiumoxid, Quarz, Bornitrid, Siliziumcarbid, Magnesiumoxid, Bariumsulfat, Talkum und Mischungen davon.

14. Polymer nach Anspruch 12 oder 13, **dadurch gekennzeichnet, dass** die erste, zweite, dritte und vierte Füllstoffkomponente in folgenden Verhältnissen bezogen auf 100% der Füllstoffmischung vorliegen:
erste Füllstoffkomponente:40 bis 60, vorzugsweise 45 bis 55 Gew.-%
zweite Füllstoffkomponente:5 bis 25, vorzugsweise 10 bis 20 Gew.-%
dritte Füllstoffkomponente:10 bis 30, vorzugsweise 15 bis 25 Gew.-%
vierte Füllstoffkomponente:5 bis 25, vorzugsweise 10 bis 20 Gew.-%,
wobei die ggf. vorliegende(n) weitere(n) Füllstoffkomponente(n) der Menge der Füllstoffkomponente zugerechnet wird, die dieser im Hinblick auf die Teilchengröße am nächsten kommt.

15. Polymer nach einem der Ansprüche 12 bis 14, **dadurch gekennzeichnet, dass** es eine Wärmeleitfähigkeit von mehr als 1 W/m*K, gemessen nach ISO 22007-2:2008, aufweist.

16. Polymer nach einem der Ansprüche 12 bis 15, **dadurch gekennzeichnet, dass** es eine Shore-Härte von A30 bis D90, vorzugsweise von A30 bis D50, gemessen nach ISO 868 bzw. DIN 53505, aufweist.

## Claims

1. A polymerizable resin composition comprising one or more polymerizable resin components selected from the group consisting of polyols, polyamines and mixtures thereof, in particular polyether polyols, polyester polyols, and polybutadiene polyols, aluminum hydroxide, and optionally further additives, such as for example wetting and dispersant additives, dyes, pigments, drying agents, fillers, polyalcohols, butanediol, hexanediol, antifoaming agents, antisettling agents, plasticizers such as for example phosphates, and catalysts, **characterized in that** the resin contains at least 75 wt.%, and in particular 75 to 85 wt.% of aluminum hydroxide composition relative to 100 wt.% of the resin composition, **characterized in that** the aluminum hydroxide is present in the form of at least four filler components, wherein the first filler component has an average particle size d₅₀ of 75 to 150 µm, preferably 80 to 125 µm,
wherein the second filler component has an average particle size d₅₀ of 10 to 60 µm, preferably 30 to 50 µm,
wherein the third filler component has an average particle size d₅₀ of 1 to 5 µm, preferably 2 to 4 µm, and
wherein the fourth filler component has an average particle size d₅₀ of 3 µm or less, preferably 0.5 to 3 µm.

2. The polymerizable resin composition as claimed in claim 1, **characterized in that** this contains at most 0.3, preferably at most 0.25 wt.% of wetting agent and is preferably essentially free from wetting agent.

3. The polymerizable resin composition as claimed in claim 1, **characterized in that** a further filler component, which is selected from the group consisting of aluminum hydroxide, aluminum oxide, aluminum nitride, quartz, boron nitride, silicon carbide, magnesium oxide, calcium carbonate, barium sulfate, talc and mixtures thereof, is present.

4. The polymerizable resin composition as claimed in claim 1 or 3, **characterized in that** the first, second, third and fourth filler component are present in the following proportions relative to 100% of the filler mixture:
first filler component: 40 to 60, preferably 45 to 55 wt.%
second filler component: 5 to 25, preferably 10 to 20 wt.%
third filler component: 10 to 30, preferably 15 to 25 wt.%
fourth filler component: 5 to 25, preferably 10 to 20 wt.%,
wherein the optionally present further filler component(s) is/are assigned to the quantity of the filler component which comes closest to this with regard to the particle size.

5. The polymerizable resin composition as claimed in one of claims 1 to 4, **characterized in that** relative to 100 wt.% of the resin composition it comprises:
5 to 25, preferably 15 to 25 wt.% of one or more polyols selected from the polyether polyols, polyester polyols, polybutadiene polyols, and hydrophobic aliphatic polyols,
0.05 to 2.5, preferably 0.5 to 1.5 wt.% of a short-chain ether alcohol,
0.0 to 0.25, preferably 0.0 to 0.15 wt.% of a wetting agent, and
75 to 85 wt.% of aluminum hydroxide,
and optionally further additives, such as for example wetting and dispersant additives, dyes, pigments, drying agents, fillers, polyalcohols, butanediol, hexanediol, antifoaming agents, antisettling agents, and plasticizers such as for example phosphates and catalysts.

6. The polymerizable resin composition as claimed in one of claims 1 to 5, **characterized in that** the resin composition has a viscosity of 1,600 to 30,000 sPa·s, preferably 1,600 to 25,000 mPa·s, wherein the viscosity is determined by the measurement method mentioned in the description.

7. A hardener composition comprising one or more hardener components selected from the group consisting of isocyanates, in particular aliphatic and aromatic isocyanates, for example methylene diphenyl diisocyanate, hexamethylene diisocyanate, toluene diisocyanate and prepolymers thereof, aluminum hydroxide, and optionally further additives, such as for example wetting and dispersant additives, dyes, pigments, drying agents, fillers, antifoaming agents, antisettling agents, plasticizers such as for example phosphates, and catalysts, **characterized in that** the hardener composition contains at least 70 wt.%, preferably from 70 to 85 wt.% of aluminum hydroxide relative to 100 wt.% of the hardener composition, **characterized in that** the aluminum hydroxide is present in the form of at least four filler components,
wherein the first filler component has an average particle size d₅₀ of 75 to 150 µm, preferably 80 to 125 µm,
wherein the second filler component has an average particle size d₅₀ of 10 to 60 µm, preferably 30 to 50 µm,
wherein the third filler component has an average particle size d₅₀ of 1 to 5 µm, preferably 2 to 4 µm, and
wherein the fourth filler component has an average particle size d₅₀ of 3 µm or less, preferably 0.5 to 3 µm.

8. The hardener composition as claimed in claim 7, **characterized in that** this contains at most 0.3, preferably at most 0.25 wt.% of wetting agent and preferably is essentially free from wetting agent.

9. The hardener composition as claimed in claim 7, **characterized in that** a further filler component, which is selected from the group consisting of aluminum hydroxide, aluminum oxide, aluminum nitride, quartz, boron nitride, silicon carbide, magnesium oxide, calcium carbonate, barium sulfate, talc and mixtures thereof, is present.

10. The hardener composition as claimed in claim 7 or 9, **characterized in that** the first, second, third and fourth filler component are present in the following proportions relative to 100% of the filler mixture:
first filler component: 40 to 60, preferably 45 to 55 wt.%
second filler component: 5 to 25, preferably 10 to 20 wt.%
third filler component: 10 to 30, preferably 15 to 25 wt.%
fourth filler component: 5 to 25, preferably 10 to 20 wt.%,
wherein the optionally present further filler component(s) is/are assigned to the quantity of the filler component which comes closest to this with regard to the particle size.

11. A polymer molded article, produced by polymerization of a resin composition as claimed in one of claims 1 to 6 or with use of a hardener composition as claimed in one of claims 7 to 10.

12. A polymer selected from polyurethanes, polyureas and mixtures or copolymers thereof, **characterized in that** it contains more than 50 vol.%, preferably more than 55 vol.% and in particular more than 60 vol.% of aluminum hydroxide relative to 100 vol.% of the polymer, **characterized in that** the aluminum hydroxide is present in the form of at least four filler components,
wherein the first filler component has an average particle size d₅₀ of 75 to 150 µm, preferably 80 to 125 µm,
wherein the second filler component has an average particle size d₅₀ of 10 to 60 µm, preferably 30 to 50 µm,
wherein the third filler component has an average particle size d₅₀ of 1 to 5 µm, preferably 2 to 4 µm, and
wherein the fourth filler component has an average particle size d₅₀ of 3 µm or less, preferably 0.5 to 3 µm.

13. The polymer as claimed in claim 12, **characterized in that** a further filler component, which is selected from the group consisting of aluminum hydroxide, aluminum oxide, quartz, boron nitride, silicon carbide, magnesium oxide, barium sulfate, talc and mixtures thereof is present.

14. The polymer as claimed in claim 12 or 13, **characterized in that** the first, second, third and fourth filler component are present in the following proportions relative to 100% of the filler mixture:
first filler component: 40 to 60, preferably 45 to 55 wt.%
second filler component: 5 to 25, preferably 10 to 20 wt.%
third filler component: 10 to 30, preferably 15 to 25 wt.%
fourth filler component: 5 to 25, preferably 10 to 20 wt.%,
wherein the optionally present further filler component(s) is/are assigned to the quantity of the filler component which comes closest to this with regard to the particle size.

15. The polymer as claimed in one of claims 12 to 14, **characterized in that** it has a thermal conductivity of more than 1 W/m*K, measured according to ISO 22007-2:2008.

16. The polymer as claimed in one of claims 12 to 15, **characterized in that** it has a Shore hardness of A30 to D90, preferably A30 to D50, measured according to ISO 868 or DIN 53505.

## Revendications

1. Composition de résine polymérisable, qui comprend les composants suivants, à savoir un ou plusieurs composants résines polymérisables choisis dans le groupe constitué par les polyols, les polyamines et leurs mélanges, notamment les polyéther-polyols, les polyester-polyols et les polybutadiène-polyols, de l'hydroxyde d'aluminium, ainsi qu'éventuellement d'autres adjuvants, tels que par exemple des additifs mouillants et dispersants, des colorants, des pigments, des agents siccatifs, des charges, des polyols, du butanediol, de l'hexanediol, des antimousses, des agents stabilisateurs, des plastifiants, tels que par exemple des phosphates, et des catalyseurs, la composition de résine contenant par rapport à 100 % en poids de la composition de résine au moins 75 % en poids et notamment de 75 à 85 % en poids d'hydroxyde d'aluminium, **caractérisée en ce que** l'hydroxyde d'aluminium se présente sous la forme d'au moins quatre composants charges,
le premier composant charge présentant une taille de particule moyenne d₅₀ de 75 à 150, de préférence de 80 à 125 µm,
le deuxième composant charge présentant une taille de particule moyenne d₅₀ de 10 à 60, de préférence de 30 à 50 µm,
le troisième composant charge présentant une taille de particule moyenne d₅₀ de 1 à 5, de préférence de 2 à 4 µm, et
le quatrième composant charge présentant une taille de particule moyenne d₅₀ de 3 µm ou moins, de préférence de 0,5 à 3 µm.

2. Composition de résine polymérisable selon la revendication 1, **caractérisée en ce que** celle-ci comprend au plus 0,3, de préférence au plus 0,25 % en poids d'agents mouillants, et est de préférence essentiellement exempte d'agents mouillants.

3. Composition de résine polymérisable selon la revendication 1, **caractérisée en ce qu'**un autre composant charge est présent, qui est choisi dans le groupe constitué par l'hydroxyde d'aluminium, l'oxyde d'aluminium, le nitrure d'aluminium, le quartz, le nitrure de bore, le carbure de silicium, l'oxyde de magnésium, le carbonate de calcium, le sulfate de baryum, le talc et leurs mélanges.

4. Composition de résine polymérisable selon la revendication 1 ou 3, **caractérisée en ce que** le premier, deuxième, troisième et quatrième composant charge sont présents en les rapports suivants par rapport à 100 % du mélange de charges :
premier composant charge : 40 à 60, de préférence 45 à 55 % en poids,
deuxième composant charge : 5 à 25, de préférence 10 à 20 % en poids,
troisième composant charge : 10 à 30, de préférence 15 à 25 % en poids,
quatrième composant charge : 5 à 25, de préférence 10 à 20 % en poids,
la quantité du composant charge le plus proche au regard de la taille de particule étant attribuée au ou aux autres composants charges éventuellement présents.

5. Composition de résine polymérisable selon l'une quelconque des revendications 1 à 4, qui comprend, par rapport à 100 % en poids de la composition de résine, les composants suivants, à savoir :
5 à 25, de préférence 15 à 25 % en poids d'un ou de plusieurs polyols, choisis parmi les polyéther-polyols, les polyester-polyols, les polybutadiène-polyols et les polyols aliphatiques hydrophobes,
0,05 à 2,5, de préférence 0,5 à 1,5 % en poids d'un éther-alcool à chaîne courte,
0,0 à 0,25, de préférence 0,0 à 0,15 % en poids d'un agent mouillant, et
75 à 85 % en poids d'hydroxyde d'aluminium,
ainsi qu'éventuellement d'autres adjuvants, tels que par exemple des additifs mouillants et dispersants, des colorants, des pigments, des agents siccatifs, des charges, des polyols, du butanediol, de l'hexanediol, des antimousses, des agents stabilisateurs, des plastifiants, tels que par exemple des phosphates, et des catalyseurs.

6. Composition de résine polymérisable selon l'une quelconque des revendications 1 à 5, **caractérisée en ce que** la composition de résine présente une viscosité de 1 600 à 30 000 mPa·s, de préférence de 1 600 à 25 000 mPa·s, la viscosité étant déterminée par la méthode de mesure indiquée dans la description.

7. Composition de durcisseur, qui comprend les composants suivants, à savoir un ou plusieurs composants durcisseurs, choisis dans le groupe constitué par les isocyanates, notamment les isocyanates aliphatiques et aromatiques, par exemple le diisocyanate de méthylène-diphényle, le diisocyanate d'hexaméthylène, le diisocyanate de toluène et leurs prépolymères, de l'hydroxyde d'aluminium, ainsi qu'éventuellement d'autres adjuvants, tels que par exemple des additifs mouillants et dispersants, des colorants, des pigments, des agents siccatifs, des charges, des antimousses, des agents stabilisateurs, des plastifiants tels que par exemple des phosphates, et des catalyseurs, la composition de durcisseur contenant par rapport à 100 % en poids de la composition de durcisseur au moins 70 % en poids, de préférence de 70 à 85 % en poids d'hydroxyde d'aluminium, **caractérisée en ce que** l'hydroxyde d'aluminium se présente sous la forme d'au moins quatre composants charges,
le premier composant charge présentant une taille de particule moyenne d₅₀ de 75 à 150, de préférence de 80 à 125 µm,
le deuxième composant charge présentant une taille de particule moyenne d₅₀ de 10 à 60, de préférence de 30 à 50 µm,
le troisième composant charge présentant une taille de particule moyenne d₅₀ de 1 à 5, de préférence de 2 à 4 µm, et
le quatrième composant charge présentant une taille de particule moyenne d₅₀ de 3 µm ou moins, de préférence de 0,5 à 3 µm.

8. Composition de durcisseur selon la revendication 7, **caractérisée en ce que** celle-ci comprend au plus 0,3, de préférence au plus 0,25 % en poids d'agents mouillants, et est de préférence essentiellement exempte d'agents mouillants.

9. Composition de durcisseur selon la revendication 7, **caractérisée en ce qu'**un autre composant charge est présent, qui est choisi dans le groupe constitué par l'hydroxyde d'aluminium, l'oxyde d'aluminium, le nitrure d'aluminium, le quartz, le nitrure de bore, le carbure de silicium, l'oxyde de magnésium, le carbonate de calcium, le sulfate de baryum, le talc et leurs mélanges.

10. Composition de durcisseur selon la revendication 7 ou 9, **caractérisée en ce que** le premier, deuxième, troisième et quatrième composant charge sont présents en les rapports suivants par rapport à 100 % du mélange de charges :
premier composant charge : 40 à 60, de préférence 45 à 55 % en poids,
deuxième composant charge : 5 à 25, de préférence 10 à 20 % en poids,
troisième composant charge : 10 à 30, de préférence 15 à 25 % en poids,
quatrième composant charge : 5 à 25, de préférence 10 à 20 % en poids,
la quantité du composant charge le plus proche au regard de la taille de particule étant attribuée au ou aux autres composants charges éventuellement présents.

11. Corps moulé polymère, fabriqué par polymérisation d'une composition de résine selon l'une quelconque des revendications 1 à 6 ou en utilisant une composition de durcisseur selon l'une quelconque des revendications 7 à 10.

12. Polymère, choisi parmi les polyuréthanes, les polyurées et leurs mélanges ou copolymères, **caractérisé en ce qu'**il comprend, par rapport à 100 % en volume du polymère, plus de 50 % en volume, de préférence plus de 55 % en volume et notamment plus de 60 % en volume d'hydroxyde d'aluminium, **caractérisé en ce que** l'hydroxyde d'aluminium se présente sous la forme d'au moins quatre composants charges,
le premier composant charge présentant une taille de particule moyenne d₅₀ de 75 à 150, de préférence de 80 à 125 µm,
le deuxième composant charge présentant une taille de particule moyenne d₅₀ de 10 à 60, de préférence de 30 à 50 µm,
le troisième composant charge présentant une taille de particule moyenne d₅₀ de 1 à 5, de préférence de 2 à 4 µm, et
le quatrième composant charge présentant une taille de particule moyenne d₅₀ de 3 µm ou moins, de préférence de 0,5 à 3 µm.

13. Polymère selon la revendication 12, **caractérisé en ce qu'**un autre composant charge est présent, qui est choisi dans le groupe constitué par l'hydroxyde d'aluminium, l'oxyde d'aluminium, le quartz, le nitrure de bore, le carbure de silicium, l'oxyde de magnésium, le sulfate de baryum, le talc et leurs mélanges.

14. Polymère selon la revendication 12 ou 13, **caractérisé en ce que** le premier, deuxième, troisième et quatrième composant charge sont présents en les rapports suivants par rapport à 100 % du mélange de charges :
premier composant charge : 40 à 60, de préférence 45 à 55 % en poids,
deuxième composant charge : 5 à 25, de préférence 10 à 20 % en poids,
troisième composant charge : 10 à 30, de préférence 15 à 25 % en poids,
quatrième composant charge : 5 à 25, de préférence 10 à 20 % en poids,
la quantité du composant charge le plus proche au regard de la taille de particule étant attribuée au ou aux autres composants charges éventuellement présents.

15. Polymère selon l'une quelconque des revendications 12 à 14, **caractérisé en ce qu'**il présente une conductivité thermique de plus de 1 W/m*K, mesurée selon ISO 22007-2:2008.

16. Polymère selon l'une quelconque des revendications 12 à 15, **caractérisé en ce qu'**il présente une dureté Shore de A30 à D90, de préférence de A30 à D50, mesurée selon ISO 868 ou DIN 53505.
